# EUROPEAN PATENT SPECIFICATION

(11) **EP 4 105 095 B1**
(45) Date of publication and mention of the grant of the patent: **28.01.2026**
(21) Application number: 21818467.9
(22) Date of filing: 28.05.2021
(51) Int. Cl.: B60W 60/00, B60W 30/18, B60W 30/16, B60W 50/08

(54) **CONTROL METHOD, APPARATUS AND DEVICE, AND STORAGE MEDIUM**
STEUERUNGSVERFAHREN, -VORRICHTUNG UND -VORRICHTUNG SOWIE SPEICHERMEDIUM
PROCÉDÉ, APPAREIL ET DISPOSITIF DE COMMANDE, ET SUPPORT DE STOCKAGE

(30) Priority: 03.06.2020 CN 202010494898
(43) Date of publication of application: 21.12.2022
(73) Proprietor: China Faw Co., Ltd., Changchun, Jilin 130011 (CN)
(72) Inventor: GAO, Shining, Changchun, Jilin 130011 (CN); WANG, Lijun, Changchun, Jilin 130011 (CN); ZHOU, Shiying, Changchun, Jilin 130011 (CN); LI, Chao, Changchun, Jilin 130011 (CN); WANG, Junjun, Changchun, Jilin 130011 (CN); LIU, Ye, Changchun, Jilin 130011 (CN); WANG, Changle, Changchun, Jilin 130011 (CN); SUN, Zhenjiang, Changchun, Jilin 130011 (CN); LIU, Taiyan, Changchun, Jilin 130011 (CN); YU, Dingyi, Changchun, Jilin 130011 (CN)
(74) Representative: Dehns Germany Partnerschaft mbB
(86) International application number: PCT/CN2021/096947
(87) International publication number: WO 2021/244444

(56) References cited:
- WO-A1-2017/211836
- CN-A- 104 648 284
- CN-A- 105 270 414
- CN-A- 108 773 372
- CN-A- 111 619 576
- US-A1- 2016 009 291
- US-A1- 2017 297 586
- US-A1- 2017 334 454
- US-A1- 2018 113 461
- US-A1- 2019 283 771

## Description

### Cross-Reference to Related Application

The present application claims the priority of Chinese Application 202010494898.8, filed in the Chinese Patent Office on June 03, 2020.

### Technical Field

The present application relates to the technical field of vehicles, for example, to a control method and apparatus, a device and a storage medium.

### Background

With the improvement in automatic driving levels, in addition to improving the ability of automatic driving algorithms and the ability of safety redundancy, user experience must also be considered. In an automatic driving state, the role of a driver changes from the driver to a passenger, and the driving experience of other passengers in a vehicle except the driver will also be switched from the driving of the original driver to automatic driving. Therefore, the control of the vehicle by automatic driving will seriously affect the riding experience.

With regard to automatic driving on the market, a vehicle distance or maximum speed is generally adjusted independently by a combination switch, and only these two dimensions can be adjusted. Driving modes such as steering control and power output are also decoupled from automatic driving. Users can often experience only one vehicle control mode in the automatic driving state.

US 2016/009291A1 discloses Selectable Autonomous Driving modes, and US 2017/0334454A1 discloses a Vehicle Control System, Vehicle Control Method, and Vehicle Control Program.

### Summary

According to the present invention, there is provided a control method comprising the features of claim 1, a computer device comprising the features of claim 7 and a computer readable storage medium comprising the features of claim 8.

Advantageous embodiments are the subject matter of the dependent claims.

The invention serves to improve the riding experience of a user during an automatic driving process.

### Brief Description of the Drawings

Fig. 1 is a flow diagram of a control method provided in Embodiment 1 of the present application;
Fig. 2 is a schematic structural diagram of a control apparatus provided in Embodiment 2 of the present application; and
Fig. 3 is a schematic structural diagram of a computer device provided in Embodiment 3 of the present application.

### Detailed Description of the Embodiments

The present application will be described below with reference to the drawings and embodiments.

Similar reference signs and letters refer to similar items in the following figures, so once an item is defined in one figure, it does not need to be defined and explained in subsequent figures. Meanwhile, in the description of the present application, the terms "first", "second" and the like are only used for distinguishing the description, but cannot be understood as indicating or implying relative importance.

### Embodiment 1

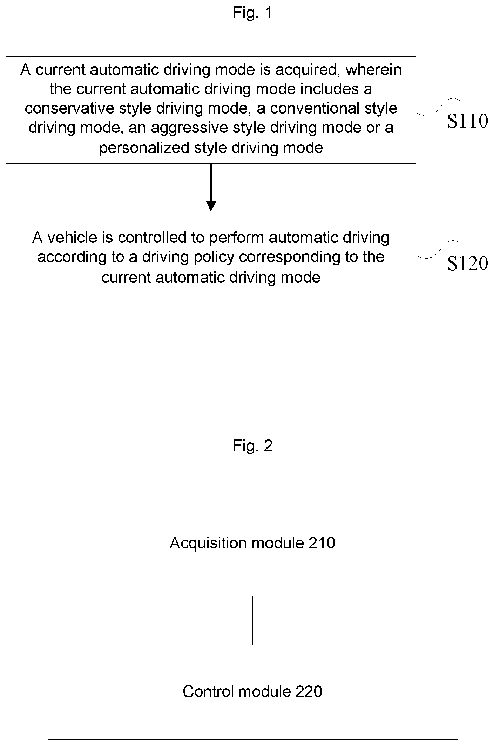

Fig. 1 is a flow diagram of a control method provided in Embodiment 1 of the present application. The present embodiment may be applicable to a situation of automatic driving control of a vehicle. The method can be executed by a control apparatus in the embodiment of the present application, and the apparatus can be implemented by software and/or hardware. As shown in Fig. 1, the method includes the following steps:
S110, a current automatic driving mode is acquired, wherein the current automatic driving mode includes a conservative style driving mode, a conventional style driving mode, an aggressive style driving mode or a personalized style driving mode.

Respective driving policies correspond to the conservative style driving mode, the conventional style driving mode, the aggressive style driving mode and the personalized style driving mode are different, wherein the driving policies include a lane change policy, an acceleration policy, a deceleration policy, a vehicle following distance policy and a maximum speed policy.

The different driving modes correspond to different lane change policies, acceleration policies, deceleration policies, vehicle following distance policies and maximum speed policies.

The way to acquire the current automatic driving mode may be that a driver sets an automatic driving mode by means of a human machine interface (Human Machine Interface, HMI) setting interface, and the current automatic driving mode can also be a factory default driving mode, which is not limited in the embodiments of the present application.

S120, a vehicle is controlled to perform automatic driving according to the driving policy corresponding to the current automatic driving mode.

Since different driving modes correspond to different lane change policies, acceleration policies, deceleration policies, vehicle following distance policies and maximum speed policies, in different driving modes, the vehicle is controlled to perform automatic driving according to different lane change policies, acceleration policies, deceleration policies, vehicle following distance policies and maximum speed policies.

According to the invention, the step of controlling the vehicle to perform automatic driving according to the driving policy corresponding to the current automatic driving mode includes:
if the current automatic driving mode is the conservative style driving mode, when a lane change time is greater than a first time threshold value, lane change path planning is performed, and when a user confirms to execute lane change, automatic lane change is executed, wherein a relative speed during lane change is greater than a first speed threshold value; if the current automatic driving mode is the conventional style driving mode, when the lane change time is greater than a second time threshold value, lane change path planning is performed, and when the driving speed of a preceding vehicle is less than a second speed threshold value, executing automatic lane change, wherein the relative speed during lane change is greater than a third speed threshold value, the third speed threshold value is greater than the first speed threshold value, and the second time threshold value is less than the first time threshold value; if the current automatic driving mode is the aggressive style driving mode, when the lane change time is greater than a third time threshold value, lane change path planning is performed, and when the driving speed of the preceding vehicle is less than a fourth speed threshold value, or when a lane where the vehicle is located is not a fast lane, automatic lane change is executed, wherein the relative speed during lane change is greater than a fifth speed threshold value, the fourth speed threshold value is greater than the second speed threshold value, the third time threshold value is less than the second time threshold value, and the fifth speed threshold value is greater than the third speed threshold value; and if the current automatic driving mode is the personalized style driving mode, historical driving data of the user is acquired, analyzing the historical driving data to obtain driving habits of the user, a lane change policy is formulated according to the driving habits of the user, and automatic lane change is executed according to the lane change policy.

As at least one embodiment, the step of controlling the vehicle to perform automatic driving according to the driving policy corresponding to the current automatic driving mode further includes:
if the current automatic driving mode is the conservative driving mode, an acceleration response time during a starting and driving process is controlled to be greater than the first time threshold value, an acceleration rising slope to be less than a first acceleration slope threshold value, an absolute value of a deceleration to be less than a first deceleration threshold value, and a deceleration slope to be less than a first deceleration slope threshold value; if the current automatic driving mode is the conventional style driving mode, the acceleration response time during the starting and driving process is controlled to be greater than the second time threshold value, the acceleration rising slope to be less than a second acceleration slope threshold value, the absolute value of the deceleration to be less than a second deceleration threshold value, and the deceleration slope to be less than a second deceleration slope threshold value, wherein the second time threshold value is less than the first time threshold value, the second acceleration slope threshold value is greater than the first acceleration slope threshold value, the second deceleration slope threshold value is greater than the first deceleration slope threshold value, and the second deceleration threshold value is greater than the first deceleration threshold value; if the current automatic driving mode is the aggressive style driving mode, the acceleration response time during the starting and driving process is controlled to be greater than the third time threshold value, the acceleration rising slope to be less than a third acceleration slope threshold value, the absolute value of the deceleration to be less than a third deceleration threshold value, and the deceleration slope to be less than a third deceleration slope threshold value, wherein the third time threshold value is less than the second time threshold value, the third acceleration slope threshold value is greater than the second acceleration slope threshold value, the third deceleration slope threshold value is greater than the second deceleration slope threshold value, and the third deceleration threshold value is greater than the second deceleration threshold value; and if the current automatic driving mode is the personalized style driving mode, historical driving data of the user is acquired, the historical driving data is analyzed to obtain driving habits of the user, an acceleration control policy and a deceleration control policy are formulated according to the driving habits of the user, and automatic driving is executed according to the acceleration control policy and the deceleration control policy.

As at least one alternative embodiment, the step of controlling the vehicle to perform automatic driving according to the driving policy corresponding to the current automatic driving mode further includes:
if the current automatic driving mode is the conservative style driving mode, a vehicle following distance is controlled to be greater than a first distance threshold value, when the preceding vehicle stops, if the vehicle is in a following-stop hold state, the distance between the vehicle and the preceding vehicle is controlled to be greater than a second distance threshold value, and a maximum vehicle speed is controlled to be less than a first preset multiple of a current lane speed limit; if the current automatic driving mode is the conventional style driving mode, the vehicle following distance is controlled to be greater than a third distance threshold value, when the preceding vehicle stops, if the vehicle is in the following-stop hold state, the distance between the vehicle and the preceding vehicle is controlled to be greater than a fourth distance threshold value, and the maximum vehicle speed is controlled to be less than a second preset multiple of the current lane speed limit, wherein the third distance threshold value is less than the first distance threshold value, the fourth distance threshold value is less than the second distance threshold value, the second preset multiple is less than the first preset multiple, the first preset multiple may be 10%, and the second preset multiple may be 5%; if the current automatic driving mode is the aggressive style driving mode, the vehicle following distance is controlled to be greater than a fifth distance threshold value, when the preceding vehicle stops, if the vehicle is in the following-stop hold state, the distance between the vehicle and the preceding vehicle is controlled to be greater than a sixth distance threshold value, and the maximum vehicle speed is controlled to be equal to the current lane speed limit, wherein the fifth distance threshold value is less than the third distance threshold value, and the sixth distance threshold value is less than the fourth distance threshold value; and if the current automatic driving mode is the personalized style driving mode, historical driving data of the user is acquired, the historical driving data is analyzed to obtain driving habits of the user, formulating a vehicle following distance control policy and a maximum speed control policy according to the driving habits of the user, and automatic driving is executed according to the vehicle following distance control policy and the maximum speed control policy.

As at least one alternative embodiment, the step of acquiring the current automatic driving mode includes:
upon detecting a click operation of the user on a drop-down box in an area corresponding to the automatic driving mode in an automatic driving mode interface, the automatic driving mode corresponding to the drop-down box is displayed; and upon detecting a touch operation of the user on the automatic driving mode corresponding to the drop-down box, the automatic driving mode is acquired as the current automatic driving mode.

As at least one alternative embodiment, the step of controlling the vehicle to perform automatic driving according to the driving policy corresponding to the current automatic driving mode includes:
if the automatic driving mode is the personalized style driving mode, a current user driving style parameter acquisition request is sent to a Telematics service provider (Telematics Service Provider, TSP) platform; driving style parameters fed back by the TSP platform is received, and an automatic driving policy is formulated according to the driving style parameters; and the vehicle is controlled to perform automatic driving according to the automatic driving policy.

As at least one alternative embodiment, the step of acquiring the current automatic driving mode includes:
an automatic driving mode input by the user into an HMI setting interface is acquired.

In one example, in step S1, the driver sets the automatic driving mode through the HMI, and there are four configurable modes in total, including a conservative style, a conventional style, an aggressive style and a personalized style. The user may set the automatic driving style when automatic driving is not activated, and may also switch the automatic driving style through the HMI in an activated state of automatic driving. In step S2, the automatic driving style set by an HMI setting interaction module is received, a setting state needs to be memorized, the style may be recalled in the next power-on cycle, or a factory default style can be controlled to be the conventional style. In step S3, whether an automatic driving system is activated is determined in real time, and if the automatic driving system is activated, an automatic driving style algorithm module previously set by the user is activated in the system. In step S4, if the driver sets the conservative style or the conventional style or the aggressive style, an automatic driving control module starts an algorithm software module stored in a local module. In step S5, if the driver sets the personalized style, the current user driving style parameter acquisition request is sent to the TSP platform through a vehicle communication module. In step S6, after receiving the request, the TSP platform reads personalized driving style model parameters of the currently logged-in account. In step S7, the TSP platform sends the corresponding parameters to the automatic driving control module through the vehicle communication module. In step S8, the automatic driving control module sends a driving style-related switching request to a driving-related control module, wherein the modules receiving the switching request from the automatic driving control module include a lane change control module, a vehicle following distance policy module, an acceleration policy module, a deceleration policy module and a maximum speed policy module. In step S9, the lane change control module receives a control request from the automatic driving control module, and switches to an automatic driving style state set by the user.

With regard to the lane change policy, different driving modes correspond to different lane change policies, as shown in Table 1 below:

**Table 1**

| | Lane change decision making | Lane change path planning |
|---|---|---|
| Conservative style driving mode | If not necessary, no lane change decision making is performed, and the user needs to confirm to execute lane change | The path planning is relatively conservative, the path planning is performed only when it is determined that a lane changing space and a relative speed are very safe, and the lane change speed is low. |
| Conventional style driving mode | Under normal circumstances, lane change decision making is performed when it is determined that the driving speed of the preceding vehicle is too slow to affect the passing efficiency, and the user does not need to click for confirmation to execute automatic lane change | According to a conventional path planning policy, a lane change path can be planned when safety conditions are met, and the lane change speed is higher than that of the conservative style |
| Aggressive style driving mode | The lane change decision making is performed frequently with the target of the maximum travelling efficiency, and the user does not need to confirm to execute automatic lane change | The path planning is the most aggressive, and on the premise of meeting the safety conditions and with the target of improving the efficiency, lane change planning is executed quickly |
| Personalized style driving mode | A personalized lane change policy model is formulated according to usual driving habits of the corresponding user | A personalized lane change path planning model is formulated according to the usual driving habits of the user |

With regard to the acceleration policy and the deceleration policy, different driving modes corresponding to different acceleration policies and deceleration policies, as shown in Table 2:

**Table 2**

| | Acceleration policy | Deceleration policy |
|---|---|---|
| Conservative style driving mode | The acceleration response during the starting and driving process is relatively slow, and the acceleration rising slope is relatively gentle | A deceleration upper limit is the lowest, and the deceleration slope is relatively gentle |
| Conventional style driving mode | The acceleration response during the starting and driving process is moderate, and the acceleration rising slope is at a moderate level | The deceleration upper limit is moderate, and the deceleration slope is normal |
| Aggressive style driving mode | The acceleration response during the starting and driving process is relatively fast, and the acceleration rising slope is relatively aggressive | The deceleration upper limit is the highest, and the deceleration slope is relatively aggressive |
| Personalized style driving mode | A personalized acceleration control response curve is formulated according to the usual driving habits of the corresponding user | A personalized acceleration control response curve is formulated according to the usual driving habits of the corresponding user |

In different automatic driving style states, response speeds and control slopes of steering control are different. The aggressive style has the fastest response and the most aggressive control; the conservative style has the slowest response and the most gentle control; and the personalized self-learning style formulates the personalized acceleration control response curve according to the usual driving habits of the user. With regard to the vehicle following distance policy and the maximum speed policy, different driving modes correspond to different following distance policies and maximum speed policies, as shown in Table 3:

**Table 3**

| | Vehicle following distance control module | Maximum speed control module |
|---|---|---|
| Conservative style driving mode | The vehicle following distance is the farthest, and when the preceding vehicle stops, the distance with the preceding vehicle is also the farthest in a Standstill state | The maximum speed is 10% lower than a current lane speed limit value |
| Conventional style driving mode | The vehicle following distance is moderate, and when the preceding vehicle stops, the distance with the preceding vehicle is moderate in the | The maximum speed is 5% lower than the current lane speed limit value |
| | Standstill state | |
| Aggressive style driving mode | The vehicle following distance is the closest, and when the preceding vehicle stops, the distance with the preceding vehicle is the closest in the Standstill state | The maximum speed is equal to the current lane speed limit value |
| Personalized style driving mode | Personalized vehicle following distance control parameters are formulated according to the usual driving habits of the user | Personalized maximum speed control parameters are formulated according to the usual driving habits of the user |

In different automatic driving modes, the adjustment conditions of an electronically controlled damping apparatus are different. In the conservative style, the electronically controlled damping apparatus is adjusted to a relatively soft state; in the conventional style, the electronically controlled damping apparatus is adjusted to a moderate state; in the aggressive style, the electronically controlled damping apparatus is adjusted to a relatively hard state; and in the personalized self-learning style, personalized control parameters of the electronically controlled damping apparatus are formulated according to the usual driving habits of the corresponding user.

The user is indicated of the current automatic driving style state by means of an HMI display module.

The embodiment of the present application proposes an automatic driving mode of level (L) 3 or more. The switching of the driving style in the automatic driving state can be realized by two methods of driver presetting or personalized self-learning, so as to adapt to the riding experience demands of different users in the automatic driving state. In a previous driving assistance system of L2 or less, the vehicle following distance and the maximum vehicle speed of the present vehicle relative to the preceding vehicle can be set through an HMI switch. In an automatic driving activated state of L3 or more, the vehicle is completely controlled by the automatic driving system. At this time, the driver changes from the driver of the vehicle to a "passenger", and an automatic driving task is not simple vehicle following control, but also includes overtaking, selecting a lane change opportunity and other driving scenarios. Therefore, a comprehensive control system is required to ensure that the passenger of the vehicle still feels comfortable and accustomed in the automatic driving state, that is, the automatic driving system should not only complete basic driving tasks, but also anthropomorphize and even exceed the driving level of excellent human drivers during a vehicle driving process.

In the technical solutions of the present embodiment, by means of acquiring a current automatic driving mode, wherein the current automatic driving mode includes a conservative style driving mode, a conventional style driving mode, an aggressive style driving mode or a personalized style driving mode, respective driving policies corresponding to the conservative style driving mode, the conventional style driving mode, the aggressive style driving mode and the personalized style driving mode are different, and the driving policies include a lane change policy, an acceleration policy, a deceleration policy, a vehicle following distance policy and/or a maximum speed policy; and controlling a vehicle to perform automatic driving according to the driving policy corresponding to the current automatic driving mode, the user can subjectively select the driving style or the driving style of the corresponding user is learned in a personalized self-learning manner, such that the automatic driving system is more intelligent and personified, and the riding experience of the user during automatic driving is improved.

### Embodiment 2

Fig. 2 is a schematic structural diagram of a control apparatus provided in Embodiment 2 of the present application. The present embodiment can be applied to a situation of vehicle control, the apparatus can be implemented by software and/or hardware, the apparatus can be integrated in any device that provides a control function, and as shown in Fig. 2, the control apparatus includes: an acquisition module 210 and a control module 220.

The acquisition module 210 is configured to acquire a current automatic driving mode, wherein the current automatic driving mode includes a conservative style driving mode, a conventional style driving mode, an aggressive style driving mode or a personalized style driving mode, respective driving policies corresponding to the conservative style driving mode, the conventional style driving mode, the aggressive style driving mode and the personalized style driving mode are different, and the driving policies include a lane change policy, an acceleration policy, a deceleration policy, a vehicle following distance policy and/or a maximum speed policy; and the control module 220 is configured to control a vehicle to perform automatic driving according to the driving policy corresponding to the current automatic driving mode.

In accordance with the invention, the control module 220 is configured to:
if the current automatic driving mode is the conservative style driving mode, when a lane change time is greater than a first time threshold value, perform lane change path planning, and when a user confirms to execute lane change, execute automatic lane change, wherein a relative speed during lane change is greater than a first speed threshold value; if the current automatic driving mode is the conventional style driving mode, when the lane change time is greater than a second time threshold value, perform lane change path planning, and when the driving speed of a preceding vehicle is less than a second speed threshold value, execute automatic lane change, wherein the relative speed during lane change is greater than a third speed threshold value, the third speed threshold value is greater than the first speed threshold value, and the second time threshold value is less than the first time threshold value; if the current automatic driving mode is the aggressive style driving mode, when the lane change time is greater than a third time threshold value, perform lane change path planning, and when the driving speed of the preceding vehicle is less than a fourth speed threshold value, or when a lane where the vehicle is located is not a fast lane, execute automatic lane change, wherein the relative speed during lane change is greater than a fifth speed threshold value, the fourth speed threshold value is greater than the second speed threshold value, the third time threshold value is less than the second time threshold value, and the fifth speed threshold value is greater than the third speed threshold value; and if the current automatic driving mode is the personalized style driving mode, acquire historical driving data of the user, analyze the historical driving data to obtain driving habits of the user, formulate a lane change policy according to the driving habits of the user, and execute automatic lane change according to the lane change policy.

As at least one alternative embodiment, the control module 220 is configured to:
if the current automatic driving mode is the conservative driving mode, control an acceleration response time during a starting and driving process to be greater than the first time threshold value, an acceleration rising slope to be less than a first acceleration slope threshold value, an absolute value of a deceleration to be less than a first deceleration threshold value, and a deceleration slope to be less than a first deceleration slope threshold value; if the current automatic driving mode is the conventional style driving mode, control the acceleration response time during the starting and driving process to be greater than the second time threshold value, the acceleration rising slope to be less than a second acceleration slope threshold value, the absolute value of the deceleration to be less than a second deceleration threshold value, and the deceleration slope to be less than a second deceleration slope threshold value, wherein the second time threshold value is less than the first time threshold value, the second acceleration slope threshold value is greater than the first acceleration slope threshold value, the second deceleration slope threshold value is greater than the first deceleration slope threshold value, and the second deceleration threshold value is greater than the first deceleration threshold value; if the current automatic driving mode is the aggressive style driving mode, control the acceleration response time during the starting and driving process to be greater than the third time threshold value, the acceleration rising slope to be less than a third acceleration slope threshold value, the absolute value of the deceleration to be less than a third deceleration threshold value, and the deceleration slope to be less than a third deceleration slope threshold value, wherein the third time threshold value is less than the second time threshold value, the third acceleration slope threshold value is greater than the second acceleration slope threshold value, the third deceleration slope threshold value is greater than the second deceleration slope threshold value, and the third deceleration threshold value is greater than the second deceleration threshold value; and if the current automatic driving mode is the personalized style driving mode, acquire historical driving data of the user, analyze the historical driving data to obtain driving habits of the user, formulate an acceleration control policy and a deceleration control policy according to the driving habits of the user, and execute automatic driving according to the acceleration control policy and the deceleration control policy.

As at least one alternative embodiment, the control module 220 is configured to:
if the current automatic driving mode is the conservative style driving mode, control a vehicle following distance to be greater than a first distance threshold value, when the preceding vehicle stops, if the vehicle is in a following-stop hold state, control the distance between the vehicle and the preceding vehicle to be greater than a second distance threshold value, and control a maximum vehicle speed to be less than a first preset multiple of a current lane speed limit; if the current automatic driving mode is the conventional style driving mode, control the vehicle following distance to be greater than a third distance threshold value, when the preceding vehicle stops, if the vehicle is in the following-stop hold state, control the distance between the vehicle and the preceding vehicle to be greater than a fourth distance threshold value, and control the maximum vehicle speed to be less than a second preset multiple of the current lane speed limit, wherein the third distance threshold value is less than the first distance threshold value, the fourth distance threshold value is less than the second distance threshold value, and the second preset multiple is less than the first preset multiple; if the current automatic driving mode is the aggressive style driving mode, control the vehicle following distance to be greater than a fifth distance threshold value, when the preceding vehicle stops, if the vehicle is in the following-stop hold state, control the distance between the vehicle and the preceding vehicle to be greater than a sixth distance threshold value, and control the maximum vehicle speed to be equal to the current lane speed limit, wherein the fifth distance threshold value is less than the third distance threshold value, and the sixth distance threshold value is less than the fourth distance threshold value; and if the current automatic driving mode is the personalized style driving mode, acquire historical driving data of the user, analyze the historical driving data to obtain driving habits of the user, formulate a vehicle following distance control policy and a maximum speed control policy according to the driving habits of the user, and execute automatic driving according to the vehicle following distance control policy and the maximum speed control policy.

As at least one alternative embodiment, the acquisition module 210 is configured to:
upon detecting a click operation of the user on a drop-down box in an area corresponding to the automatic driving mode in an automatic driving mode interface, display the automatic driving mode corresponding to the drop-down box; and upon detecting a touch operation of the user on the automatic driving mode corresponding to the drop-down box, acquire the automatic driving mode as the current automatic driving mode.

As at least one alternative embodiment, the control module 220 is configured to:
if the automatic driving mode is the personalized style driving mode, send a current user driving style parameter acquisition request to a TSP platform; receive driving style parameters fed back by the TSP platform, and formulate an automatic driving policy according to the driving style parameters; and control the vehicle to perform automatic driving according to the automatic driving policy.

As at least one alternative embodiment, the acquisition module 210 is configured to:
acquire an automatic driving mode input by the user into an HMI setting interface.

The above product can execute the method provided by any embodiment of the present application, and has corresponding functional modules and effects for executing the method.

In the technical solutions of the present embodiment, by means of acquiring a current automatic driving mode, wherein the current automatic driving mode includes a conservative style driving mode, a conventional style driving mode, an aggressive style driving mode or a personalized style driving mode, respective driving policies corresponding to the conservative style driving mode, the conventional style driving mode, the aggressive style driving mode and the personalized style driving mode are different, and the driving policies include a lane change policy, an acceleration policy, a deceleration policy, a vehicle following distance policy and/or a maximum speed policy; and controlling a vehicle to perform automatic driving according to the driving policy corresponding to the current automatic driving mode, the user can subjectively select the driving style or the driving style of the corresponding user is learned in a personalized self-learning manner, such that the automatic driving system is more intelligent and personified, and the riding experience of the user during automatic driving is improved.

### Embodiment 3

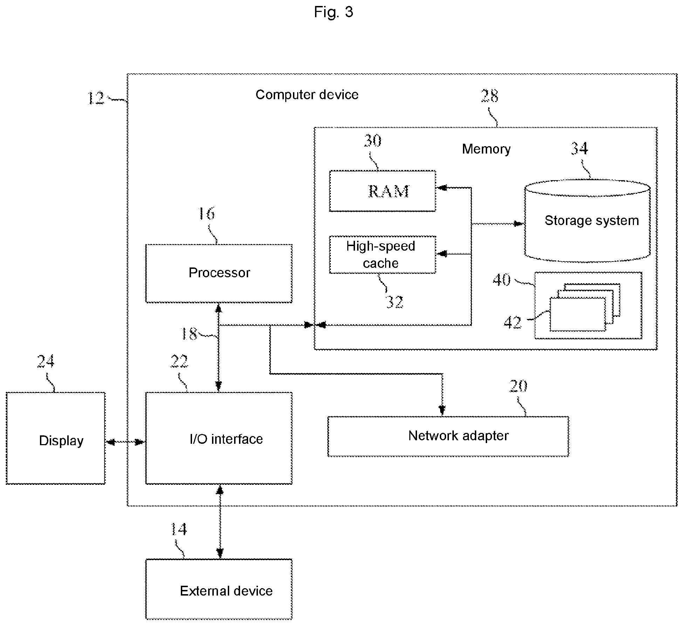

Fig. 3 is a schematic structural diagram of a computer device provided in Embodiment 3 of the present application. Fig. 3 shows a block diagram of an exemplary computer device 12 that is suitable for implementing the embodiments of the present application. The computer device 12 shown in Fig. 3 is only an example, and should not impose any limitation on the functions and application ranges of the embodiments of the present application.

As shown in Fig. 3, the computer device 12 takes the form of a general-purpose computing device. Components of the computer device 12 can include, but are not limited to, one or more processors or processing units 16, a system memory 28, and a bus 18 for connecting different system components (including the system memory 28 and the processing unit 16).

The bus 18 represents one or more of several types of bus structures, including a memory bus or memory controller, a peripheral bus, a graphics acceleration port, a processor, or a local area bus using any one of a plurality of bus structures. By way of example, these architectures include, but are not limited to, an industrial standard architecture (Industrial Standard Architecture, ISA) bus, a microchannel architecture (MicroChannel Architecture, MCA) bus, an enhanced ISA bus, a video electronics standards association (Video Electronics Standards Association, VESA) local area bus, and a peripheral component interconnect (Peripheral Component Interconnect, PCI) bus.

The computer device 12 includes a plurality of computer system readable media. These media can be any available media that can be accessed by the computer device 12, including both volatile and nonvolatile media, and removable and non-removable media.

The system memory 28 can include a computer system readable medium in the form of a volatile memory, such as a random access memory (Random Access Memory, RAM) 30 and/or a cache memory 32. The computer device 12 can include other removable/non-removable, volatile/nonvolatile computer system storage media. For example only, a storage system 34 can be configured to read and write a non-removable non-volatile magnetic medium (not shown in Fig. 3, commonly referred to as a "hard disk drive"). Although not shown in Fig. 3, it is possible to provide a magnetic disk drive that is configured to read and write removable nonvolatile magnetic disks (e.g., "floppy disks"), and an optical disk drive that is configured to read and write removable nonvolatile optical disks (e.g., a compact disc-read only memory, CD-ROM), a digital video disc-ROM (Digital Video Disc-ROM, DVD-ROM) or other optical media). In these cases, each drive can be connected to the bus 18 by means of one or more data medium interfaces. The memory 28 can include at least one program product, which has a group (e.g., at least one) of program modules, and these program modules are configured to execute the functions of the embodiments of the present application.

A program/utility 40 having a group (e.g., at least one) of program modules 42 can be stored, for example, in the memory 28. Such program module 42 includes, but is not limited to, an operating system, one or more application programs, and other programs modules and program data, each or a combination of these examples may include an implementation of a network environment. The program module 42 generally executes the functions and/or methods in the embodiments described in the present application.

The computer device 12 can also communicate with one or more external devices 14 (e.g., a keyboard, a pointing device, a display 24, and the like), can also communicate with one or more devices that enable a user to interact with the computer device 12, and/or communicate with any device (e.g., a network card, a modem, and the like) that enables the computer device 12 to communicate with one or more other computing devices. This communication can be implemented by an input/output (I/O) interface 22. In addition, in the present embodiment, the computer device 12 and the display 24 do not exist as independent individuals, but are embedded in a mirror surface, and when a display surface of the display 24 performs no display, the display surface of the display 24 and the mirror surface are visually integrated. Moreover, the computer device 12 can also communicate with one or more networks (e.g., a local area network (Local Area Network, LAN), and a wide area network (Wide Area Network, WAN), and/or public networks, such as the Internet) through a network adapter 20. As shown in the figure, the network adapter 20 communicates with other modules of the computer device 12 through the bus 18. It should be understood that, although not shown in the figure, other hardware and/or software modules can be used in conjunction with the computer device 12, including, but are not limited to: microcodes, device drives, redundant processing units, arrays of external magnetic disk drives, redundant arrays of independent hard disks (Redundant Arrays of Independent Disks, RAID) systems, magnetic tape drives, data backup storage systems, etc.

The processing unit 16 runs the programs stored in the system memory 28 to execute a variety of functional applications and data processing, for example, implementing the control method provided by the embodiments of the present application:
acquiring a current automatic driving mode, wherein the current automatic driving mode includes a conservative style driving mode, a conventional style driving mode, an aggressive style driving mode or a personalized style driving mode, respective driving policies corresponding to the conservative style driving mode, the conventional style driving mode, the aggressive style driving mode and the personalized style driving mode are different, and the driving policies include a lane change policy, an acceleration policy, a deceleration policy, a vehicle following distance policy and a maximum speed policy; and controlling a vehicle to perform automatic driving according to the driving policy corresponding to the current automatic driving mode.

### Embodiment 4

Embodiment 4 of the present application provides a computer-readable storage medium, on which a computer program is stored, wherein when executed by a processor, the program executes the control method provided by the embodiments of the present application:
acquiring a current automatic driving mode, wherein the current automatic driving mode includes a conservative style driving mode, a conventional style driving mode, an aggressive style driving mode or a personalized style driving mode, respective driving policies corresponding to the conservative style driving mode, the conventional style driving mode, the aggressive style driving mode and the personalized style driving mode are different, and the driving policies include a lane change policy, an acceleration policy, a deceleration policy, a vehicle following distance policy and a maximum speed policy; and controlling a vehicle to perform automatic driving according to the driving policy corresponding to the current automatic driving mode.

Any combination of one or more computer-readable media can be employed. The computer-readable medium can be a computer-readable signal medium or a computer-readable storage medium. The computer-readable storage medium can be, for example, but is not limited to, electrical, magnetic, optical, electromagnetic, infrared, or semiconductor systems, apparatuses or devices, or a combination of any of the above systems, apparatuses or devices. Examples (non-exhaustive list) of the computer-readable storage medium include: an electrical connection with one or more wires, a portable computer disk, a hard disk, an RAM, an ROM, an erasable programmable read only memory (Erasable Programmable Read Only Memory, EPROM, an EPROM or a flash memory), an optical fiber, a CD-ROM, an optical storage device, a magnetic storage device, or any suitable combination of the above devices. The computer-readable storage medium can be any tangible medium that contains or stores a program herein, and the program can be used by or combined with an instruction execution system, apparatus or device for use.

The computer-readable signal medium can include a data signal that is propagated in a baseband or propagated as part of a carrier, and computer-readable program codes are carried therein. Such a propagated data signal can take a variety of forms, including, but are not limited to, an electromagnetic signal, an optical signal, or any suitable combination of the foregoing signals. The computer-readable signal medium can also be any computer-readable medium other than the computer-readable storage medium, and the computer-readable medium can send, propagate or transmit the program that is used by or combined with the instruction execution system, apparatus or device for use.

Program codes contained in the computer-readable medium can be transmitted by using any suitable medium, including, but are not limited to: wireless, wire, optical cable, radio frequency (Radio Frequency, RF) and the like, or any suitable combination of the foregoing manners.

Computer program codes for executing the operations of the present application can be written in one or more programming languages or combinations thereof, the programming languages include object-oriented programming languages, such as Java, Smalltalk and C++, and also includes conventional procedural programming languages, such as "C" language or similar programming languages. The program codes can be completely executed on a user computer, partly on the user computer, as a stand-alone software package, partly on the user computer and partly on a remote computer, or completely on the remote computer or a server. In the case involving the remote computer, the remote computer can be connected to the user computer by means of any kind of network, including an LAN or a WAN, or can be connected to an external computer (e.g., connected by means of the Internet by using an internet service provider).

## Claims

1. A control method, comprising:
acquiring a current automatic driving mode of a vehicle (S110), wherein the current automatic driving mode comprises a conservative style driving mode, a conventional style driving mode, an aggressive style driving mode and a personalized style driving mode, respective driving policies corresponding to the conservative style driving mode, the conventional style driving mode, the aggressive style driving mode and the personalized style driving mode are different, and the driving policies comprise at least one of the following: a lane change policy, an acceleration policy, a deceleration policy, a vehicle following distance policy and a maximum speed policy; and
controlling the vehicle to perform automatic driving according to the driving policies corresponding to the current automatic driving mode (S120);
**characterised in that** the driving policies comprise the lane change policy, and controlling the vehicle to perform automatic driving according to the driving policies corresponding to the current automatic driving mode (S110) comprises:
if the current automatic driving mode is the conservative style driving mode, when a lane change time of the vehicle is greater than a first time threshold value, performing lane change path planning, and when a user confirms to execute lane change, executing automatic lane change, wherein a relative speed to the preceding vehicle during the lane change of the vehicle is greater than a first speed threshold value;
if the current automatic driving mode is the conventional style driving mode, when the lane change time of the vehicle is greater than a second time threshold value, performing lane change path planning, and when a driving speed of a preceding vehicle is less than a second speed threshold value, executing automatic lane change, wherein a relative speed to the preceding vehicle during the lane change of the vehicle is greater than a third speed threshold value, the third speed threshold value is greater than the first speed threshold value, and the second time threshold value is less than the first time threshold value;
if the current automatic driving mode is the aggressive style driving mode, when the lane change time of the vehicle is greater than a third time threshold value, performing lane change path planning, and when a driving speed of the preceding vehicle is less than a fourth speed threshold value, or when a lane where the vehicle is located is not a fast lane, executing automatic lane change, wherein a relative speed to the preceding vehicle during the lane change of the vehicle is greater than a fifth speed threshold value, the fourth speed threshold value is greater than the second speed threshold value, the third time threshold value is less than the second time threshold value, and the fifth speed threshold value is greater than the third speed threshold value; and
if the current automatic driving mode is the personalized style driving mode, acquiring historical driving data of the user, analyzing the historical driving data to obtain driving habits of the user, formulating a lane change policy according to the driving habits of the user, and executing automatic lane change according to the lane change policy.

2. The method according to claim 1, wherein when the driving policies further comprise the acceleration policy and the deceleration policy, controlling the vehicle to perform automatic driving according to the driving policies corresponding to the current automatic driving mode further comprises:
if the current automatic driving mode is the conservative driving mode, controlling an acceleration response time of the vehicle during a starting and driving process to be greater than the first time threshold value, an acceleration rising slope to be less than a first acceleration slope threshold value, an absolute value of a deceleration to be less than a first deceleration threshold value, and a deceleration slope to be less than a first deceleration slope threshold value;
if the current automatic driving mode is the conventional style driving mode, controlling the acceleration response time of the vehicle during the starting and driving process to be greater than the second time threshold value, the acceleration rising slope to be less than a second acceleration slope threshold value, the absolute value of the deceleration to be less than a second deceleration threshold value, and the deceleration slope to be less than a second deceleration slope threshold value, wherein the second acceleration slope threshold value is greater than the first acceleration slope threshold value, the second deceleration slope threshold value is greater than the first deceleration slope threshold value, and the second deceleration threshold value is greater than the first deceleration threshold value;
if the current automatic driving mode is the aggressive style driving mode, controlling the acceleration response time of the vehicle during the starting and driving process to be greater than the third time threshold value, the acceleration rising slope to be less than a third acceleration slope threshold value, the absolute value of the deceleration to be less than a third deceleration threshold value, and the deceleration slope to be less than a third deceleration slope threshold value, wherein the third acceleration slope threshold value is greater than the second acceleration slope threshold value, the third deceleration slope threshold value is greater than the second deceleration slope threshold value, and the third deceleration threshold value is greater than the second deceleration threshold value; and
if the current automatic driving mode is the personalized style driving mode, formulating an acceleration control policy and a deceleration control policy according to driving habits of the user, and executing automatic driving according to the acceleration control policy and the deceleration control policy.

3. The method according to claim 1, wherein when the driving policies further comprise the vehicle following distance policy and the maximum policy, controlling the vehicle to perform automatic driving according to the driving policy corresponding to the current automatic driving mode further comprises:
if the current automatic driving mode is the conservative style driving mode, controlling a vehicle following distance of the vehicle to be greater than a first distance threshold value, when the preceding vehicle stops, if the vehicle is in a following-stop hold state, controlling the distance between the vehicle and the preceding vehicle to be greater than a second distance threshold value, and controlling a maximum vehicle speed of the vehicle to be less than a first preset multiple of a current lane speed limit;
if the current automatic driving mode is the conventional style driving mode, controlling the vehicle following distance of the vehicle to be greater than a third distance threshold value, when the preceding vehicle stops, if the vehicle is in the following-stop hold state, controlling the distance between the vehicle and the preceding vehicle to be greater than a fourth distance threshold value, and controlling the maximum vehicle speed of the vehicle to be less than a second preset multiple of the current lane speed limit, wherein the third distance threshold value is less than the first distance threshold value, the fourth distance threshold value is less than the second distance threshold value, and the second preset multiple is less than the first preset multiple;
if the current automatic driving mode is the aggressive style driving mode, controlling the vehicle following distance of the vehicle to be greater than a fifth distance threshold value, when the preceding vehicle stops, if the vehicle is in the following-stop hold state, controlling the distance between the vehicle and the preceding vehicle to be greater than a sixth distance threshold value, and controlling the maximum vehicle speed of the vehicle to be equal to the current lane speed limit, wherein the fifth distance threshold value is less than the third distance threshold value, and the sixth distance threshold value is less than the fourth distance threshold value; and
if the current automatic driving mode is the personalized style driving mode, formulating a vehicle following distance control policy and a maximum speed control policy according to driving habits of the user, and executing automatic driving according to the vehicle following distance control policy and the maximum speed control policy.

4. The method according to claim 1, wherein the step of acquiring the current automatic driving mode of the vehicle (S110) comprises:
upon detecting a click operation of the user on a drop-down box in an area corresponding to the automatic driving mode in an automatic driving mode interface, displaying a plurality of automatic driving modes corresponding to the drop-down box; and
upon detecting a touch operation of the user on one automatic driving mode corresponding to the drop-down box, acquiring the automatic driving mode as the current automatic driving mode.

5. The method according to claim 4, wherein controlling the vehicle to perform automatic driving according to the driving policy corresponding to the current automatic driving mode (S120) comprises:
if the current automatic driving mode is the personalized style driving mode, sending a current user driving style parameter acquisition request to a Telematics service provider (TSP) platform;
receiving driving style parameters fed back by the TSP platform, and formulating an automatic driving policy according to the driving style parameters; and
controlling the vehicle to perform automatic driving according to the automatic driving policy.

6. The method according to claim 1, wherein acquiring the current automatic driving mode of the vehicle (S110) comprises:
acquiring an automatic driving mode input by the user into a human machine interface (HMI) setting interface, and taking the acquired automatic driving mode as the current automatic driving mode.

7. A computer device, comprising a memory, a processor (16), and a computer program stored on the memory (28) and executable on the processor (16), wherein when executing the program, the processor (16) implements the control method according to any one of claims 1-6.

8. A computer-readable storage medium, on which a computer program is stored, wherein when executed by a processor, the program implements the control method according to any one of claims 1-6.

## Patentansprüche

1. Ein Steuerungsverfahren, umfassend:
Erfassen eines aktuellen automatischen Fahrmodus eines Fahrzeugs (S110), wobei der aktuelle automatische Fahrmodus einen konservativen Fahrstil, einen konventionellen Fahrstil, einen aggressiven Fahrstil und einen personalisierten Fahrstil umfasst, wobei die jeweiligen Fahrrichtlinien, die dem konservativen Fahrstil, dem konventionellen Fahrstil, dem aggressiven Fahrstil und dem personalisierten Fahrstil entsprechen, unterschiedlich sind und die Fahrrichtlinien mindestens eines der folgenden Elemente umfassen: eine Spurwechselrichtlinie, eine Beschleunigungsrichtlinie, eine Verzögerungsrichtlinie, eine Fahrzeugabstandsrichtlinie und eine Höchstgeschwindigkeitsrichtlinie; und
Steuern des Fahrzeugs, um automatisches Fahren gemäß den Fahrrichtlinien durchzuführen, die dem aktuellen automatischen Fahrmodus entsprechen (S120);
**dadurch gekennzeichnet, dass** die Fahrrichtlinien die Spurwechselrichtlinie umfassen und die Steuerung des Fahrzeugs zur Durchführung des automatischen Fahrens gemäß den Fahrrichtlinien, die dem aktuellen automatischen Fahrmodus entsprechen (S110), Folgendes umfasst:
wenn der aktuelle automatische Fahrmodus der konservative Fahrmodus ist, wenn eine Spurwechselzeit des Fahrzeugs größer als ein erster Zeit-Schwellenwert ist, Durchführung einer Spurwechsel-Pfadplanung und, wenn ein Benutzer die Ausführung eines Spurwechsels bestätigt, Durchführung eines automatischen Spurwechsels, wobei eine relative Geschwindigkeit zu dem vorausfahrenden Fahrzeug während des Spurwechsels des Fahrzeugs größer als ein erster Geschwindigkeits-Schwellenwert ist;
wenn der aktuelle automatische Fahrmodus der konventionelle Fahrmodus ist, wenn die Spurwechselzeit des Fahrzeugs größer als ein zweiter Zeit-Schwellenwert ist, Durchführung einer Spurwechsel-Pfadplanung, und wenn eine Fahrgeschwindigkeit eines vorausfahrenden Fahrzeugs kleiner als ein zweiter Geschwindigkeits-Schwellenwert ist, Durchführung eines automatischen Spurwechsel, wobei eine relative Geschwindigkeit zum vorausfahrenden Fahrzeug während des Spurwechsels des Fahrzeugs größer als ein dritter Geschwindigkeits-Schwellenwert ist, der dritte Geschwindigkeitsschwellenwert größer ist als der erste Geschwindigkeitsschwellenwert und der zweite Zeit-Schwellenwert kleiner ist als der erste Zeit-Schwellenwert;
wenn der aktuelle automatische Fahrmodus der aggressive Fahrmodus ist, wenn die Spurwechselzeit des Fahrzeugs größer als ein dritter Zeitschwellenwert ist, Durchführung einer Spurwechselwegplanung, und wenn eine Fahrgeschwindigkeit des vorausfahrenden Fahrzeugs kleiner als ein vierter Geschwindigkeitsschwellenwert ist oder wenn eine Spur, auf der sich das Fahrzeug befindet, keine Überholspur ist, Durchführung eines automatischen Spurwechsels, wobei eine relative Geschwindigkeit zum vorausfahrenden Fahrzeug während des Spurwechsels des Fahrzeugs größer als ein fünfter Geschwindigkeitsschwellenwert ist, der vierte Geschwindigkeitsschwellenwert größer ist als der zweite Geschwindigkeitsschwellenwert, der dritte Zeit-Schwellenwert kleiner ist als der zweite Zeit-Schwellenwert und der fünfte Geschwindigkeitsschwellenwert größer ist als der dritte Geschwindigkeitsschwellenwert; und
wenn der aktuelle automatische Fahrmodus der personalisierte Fahrstil ist, Erfassen historischer Fahrdaten des Benutzers, Analysieren der historischen Fahrdaten, um die Fahrgewohnheiten des Benutzers zu ermitteln, Formulieren einer Spurwechselrichtlinie entsprechend den Fahrgewohnheiten des Benutzers und Durchführung eines automatischen Spurwechsels gemäß der Spurwechselrichtlinie.

2. Verfahren gemäß Anspruch 1, wobei, wenn die Fahrrichtlinien ferner die Beschleunigungsrichtlinie und die Verzögerungsrichtlinie umfassen, das Steuern des Fahrzeugs, um das automatische Fahren gemäß den dem aktuellen automatischen Fahrmodus entsprechenden Fahrrichtlinien durchzuführen, ferner umfasst:
wenn der aktuelle automatische Fahrmodus der konservative Fahrmodus ist, Steuern einer Beschleunigungsreaktionszeit des Fahrzeugs während eines Start- und Fahrvorgangs, so dass sie größer als der erste Zeit-Schwellenwert ist, einer Beschleunigungsanstiegssteigung, so dass sie kleiner als ein erster Beschleunigungssteigungs-Schwellenwert ist, eines Absolutwerts einer Verzögerung, so dass sie kleiner als ein erster VerzögerungsSchwellenwert ist, und einer Verzögerungssteigung, so dass sie kleiner als ein erster Verzögerungssteigungs-Schwellenwert ist;
wenn der aktuelle automatische Fahrmodus der konventionelle Fahrmodus ist, die Beschleunigungsreaktionszeit des Fahrzeugs während des Start- und Fahrvorgangs so zu steuern, dass sie größer als der zweite Zeit-Schwellenwert ist, die Beschleunigungsanstiegssteigung kleiner als ein zweiter Beschleunigungssteigungs-Schwellenwert ist, der Absolutwert der Verzögerung kleiner als ein zweiter Verzögerungsschwellenwert ist und die Verzögerungssteigung kleiner als ein zweiter Verzögerungssteigungsschwellenwert ist, wobei der zweite Beschleunigungssteigungsschwellenwert größer als der erste Beschleunigungssteigungsschwellenwert ist, der zweite Verzögerungssteigungsschwellenwert größer als der erste Verzögerungssteigungsschwellenwert ist und der zweite Verzögerungsschwellenwert größer als der erste Verzögerungsschwellenwert ist;
wenn der aktuelle automatische Fahrmodus der aggressive Fahrmodus ist, Steuern der Beschleunigungsreaktionszeit des Fahrzeugs während des Start- und Fahrvorgangs, sodass sie größer als der dritte Zeit-Schwellenwert ist, die Beschleunigungsanstiegssteigung kleiner als ein dritter Beschleunigungssteigungsschwellenwert ist, der Absolutwert der Verzögerung kleiner als ein dritter Verzögerungsschwellenwert ist und die Verzögerungssteigung kleiner als ein dritter Verzögerungssteigungsschwellenwert ist, wobei der dritte Beschleunigungssteigungsschwellenwert größer als der zweite Beschleunigungssteigungsschwellenwert ist, der dritte Verzögerungssteigungsschwellenwert größer als der zweite Verzögerungssteigungsschwellenwert ist und der dritte Verzögerungsschwellenwert größer als der zweite Verzögerungsschwellenwert ist; und
wenn der aktuelle automatische Fahrmodus der personalisierte Fahrstil ist, eine Beschleunigungssteuerungsrichtlinie und eine Verzögerungssteuerungsrichtlinie entsprechend den Fahrgewohnheiten des Benutzers formuliert werden und das automatische Fahren gemäß der Beschleunigungssteuerungsrichtlinie und der Verzögerungssteuerungsrichtlinie durchgeführt wird.

3. Verfahren gemäß Anspruch 1, wobei, wenn die Fahrrichtlinien ferner die Fahrzeugabstandsrichtlinie und die Maximalrichtlinie umfassen, das Steuern des Fahrzeugs zur Durchführung des automatischen Fahrens gemäß der dem aktuellen automatischen Fahrmodus entsprechenden Fahrrichtlinie ferner umfasst:
wenn der aktuelle automatische Fahrmodus der konservative Fahrmodus ist, Steuerung eines Fahrzeugabstands des Fahrzeugs, so dass er größer als ein erster Abstandsschwellenwert ist, wenn das vorausfahrende Fahrzeug anhält, wenn sich das Fahrzeug in einem Folge-Stopp-Haltezustand befindet, Steuerung des Abstands zwischen dem Fahrzeug und dem vorausfahrenden Fahrzeug, so dass er größer als ein zweiter Abstandsschwellenwert ist, und Steuerung einer maximalen Fahrzeuggeschwindigkeit des Fahrzeugs, so dass sie kleiner als ein erstes voreingestelltes Vielfaches einer aktuellen Geschwindigkeitsbegrenzung für die Fahrspur ist;
wenn der aktuelle automatische Fahrmodus der herkömmliche Fahrmodus ist, Steuereung des Abstands des Fahrzeugs zum vorausfahrenden Fahrzeug so, dass er größer als ein dritter Abstandsschwellenwert ist, wenn das vorausfahrende Fahrzeug anhält, wenn sich das Fahrzeug in dem Folge-Stopp-Haltezustand befindet, Steurerung des Abstands zwischen dem Fahrzeug und dem vorausfahrenden Fahrzeug so, dass er größer als ein vierter Abstandsschwellenwert ist, und Steuern der maximalen Fahrzeuggeschwindigkeit des Fahrzeugs so, dass sie kleiner als ein zweites voreingestelltes Vielfaches der aktuellen Geschwindigkeitsbegrenzung für die Fahrspur ist, wobei der dritte Abstandsschwellenwert kleiner als der erste Abstandsschwellenwert ist, der vierte Abstandsschwellenwert kleiner als der zweite Abstandsschwellenwert ist und das zweite voreingestellte Vielfache kleiner als das erste voreingestellte Vielfache ist;
wenn der aktuelle automatische Fahrmodus der aggressive Fahrmodus ist, Steuern des Fahrzeugabstands des Fahrzeugs so, dass er größer als ein fünfter Abstandsschwellenwert ist, wenn das vorausfahrende Fahrzeug anhält, wenn sich das Fahrzeug in dem Haltezustand befindet, Steuern des Abstands zwischen dem Fahrzeug und dem vorausfahrenden Fahrzeug so, dass er größer als ein sechster Abstandsschwellenwert ist, und Steuern der maximalen Fahrzeuggeschwindigkeit des Fahrzeugs so, dass sie der aktuellen Geschwindigkeitsbegrenzung für die Fahrspur entspricht, wobei der fünfte Abstandsschwellenwert kleiner als der dritte Abstandsschwellenwert ist und der sechste Abstandsschwellenwert kleiner als der vierte Abstandsschwellenwert ist; und
wenn der aktuelle automatische Fahrmodus der personalisierte Fahrstil ist, eine Fahrzeugabstandsregelungsrichtlinie und eine Höchstgeschwindigkeitsregelungsrichtlinie entsprechend den Fahrgewohnheiten des Benutzers zu formulieren und das automatische Fahren gemäß der Fahrzeugabstandsregelungsrichtlinie und der Höchstgeschwindigkeitsregelungsrichtlinie durchzuführen.

4. Verfahren gemäß Anspruch 1, wobei der Schritt des Erfassens des aktuellen automatischen Fahrmodus des Fahrzeugs (S110) umfasst:
beim Detektieren einer Klickoperation des Benutzers auf einem Dropdown-Feld in einem Bereich, der dem automatischen Fahrmodus in einer automatischen Fahrmodus-Schnittstelle entspricht, Anzeigen einer Vielzahl von automatischen Fahrmodi, die dem Dropdown-Feld entsprechen; und
beim Detektieren einer Berührungsoperation des Benutzers auf einen automatischen Fahrmodus, der dem Dropdown-Feld entspricht, Erfassen des automatischen Fahrmodus als aktuellen automatischen Fahrmodus.

5. Verfahren gemäß Anspruch 4, wobei das Steuern des Fahrzeugs zur Durchführung des automatischen Fahrens gemäß der dem aktuellen automatischen Fahrmodus entsprechenden Fahrrichtlinie (S120) umfasst:
wenn der aktuelle automatische Fahrmodus der personalisierte Fahrstil-Modus ist, Senden einer Anfrage zur Erfassung der aktuellen Fahrstilparameter des Benutzers an eine Telematikdienstanbieter-Plattform (TSP);
Empfangen der von der TSP-Plattform zurückgemeldeten Fahrstilparameter und Formulieren einer automatischen Fahrrichtlinie gemäß den Fahrstilparametern; und
Steuern des Fahrzeugs, um automatisches Fahren gemäß der automatischen Fahrrichtlinie durchzuführen.

6. Verfahren gemäß Anspruch 1, wobei das Erfassen des aktuellen automatischen Fahrmodus von durch das Fahrzeug (S110) umfasst:
Erfassen eines vom Benutzer in eine Mensch-Maschine-Schnittstelle (HMI) eingegebenen automatischen Fahrmodus und Übernehmen des erfassten automatischen Fahrmodus als aktuellen automatischen Fahrmodus.

7. Computergerät, das einen Speicher, einen Prozessor (16) und ein auf dem Speicher (28) gespeichertes und auf dem Prozessor (16) ausführbares Computerprogramm umfasst, wobei der Prozessor (16) bei der Ausführung des Programms das Steuerungsverfahren gemäß Anspruch 1 bis 6 implementiert.

8. Computerlesbares Speichermedium, auf dem ein Computerprogramm gespeichert ist, wobei das Programm bei Ausführung durch einen Prozessor das Steuerungsverfahren gemäß einem der Ansprüche 1 bis 6 implementiert.

## Revendications

1. Procédé de commande, comprenant :
acquérir un mode de conduite automatique actuel d'un véhicule (S110), dans lequel le mode de conduite automatique actuel comprend un mode de conduite conservateur, un mode de conduite conventionnel, un mode de conduite agressif et un mode de conduite personnalisé, les politiques de conduite respectives correspondant au mode de conduite conservateur, au mode de conduite conventionnel, au mode de conduite agressif et au mode de conduite personnalisé sont différentes, et les politiques de conduite comprennent au moins l'un des éléments suivants : une politique de changement de voie, une politique d'accélération, une politique de décélération, une politique de distance de suivi du véhicule et une politique de vitesse maximale ; et
commander le véhicule pour effectuer une conduite automatique selon les politiques de conduite correspondant au mode de conduite automatique actuel (S120) ;
**caractérisé en ce que** les politiques de conduite comprennent la politique de changement de voie, et commander le véhicule pour effectuer une conduite automatique selon les politiques de conduite correspondant au mode de conduite automatique actuel (S110) comprend :
si le mode de conduite automatique actuel est le mode de conduite conservateur, lorsque le temps du changement de voie du véhicule est supérieur à une première valeur seuil de temps, effectuer une planification de la trajectoire de changement de voie, et lorsque l'utilisateur confirme l'exécution du changement de voie, effectuer un changement de voie automatique, dans lequel la vitesse relative par rapport au véhicule précédent pendant le changement de voie du véhicule est supérieure à une première valeur seuil de vitesse ;
si le mode de conduite automatique actuel est le mode de conduite conventionnel, lorsque le temps du changement de voie du véhicule est supérieur à une deuxième valeur seuil de temps, effectuer une planification de la trajectoire de changement de voie, et lorsque la vitesse de conduite d'un véhicule précédent est inférieure à une deuxième valeur seuil de vitesse, exécuter le changement de voie automatique, dans lequel la vitesse relative par rapport au véhicule précédent pendant le changement de voie du véhicule est supérieure à une troisième valeur seuil de vitesse, la troisième valeur seuil de vitesse est supérieure à la première valeur seuil de vitesse, et la deuxième valeur seuil de temps est inférieure à la première valeur seuil de temps ;
si le mode de conduite automatique actuel est le mode de conduite agressif, lorsque le temps du changement de voie du véhicule est supérieur à une troisième valeur seuil de temps, effectuer une planification de trajectoire de changement de voie, et lorsque la vitesse de conduite du véhicule précédent est inférieure à une quatrième valeur seuil de vitesse, ou lorsque la voie sur laquelle se trouve le véhicule n'est pas une voie rapide, exécuter un changement de voie automatique, dans lequel la vitesse relative par rapport au véhicule précédent pendant le changement de voie du véhicule est supérieure à une cinquième valeur seuil de vitesse, la quatrième valeur seuil de vitesse est supérieure à la deuxième valeur seuil de vitesse, la troisième valeur seuil de temps est inférieure à la deuxième valeur seuil de temps, et la cinquième valeur seuil de vitesse est supérieure à la troisième valeur seuil de vitesse ; et
si le mode de conduite automatique actuel est le mode de conduite personnalisé, acquérir les données de conduite historiques de l'utilisateur, analyser les données de conduite historiques pour obtenir les habitudes de conduite de l'utilisateur, formuler une politique de changement de voie selon les habitudes de conduite de l'utilisateur, et exécuter un changement de voie automatique selon la politique de changement de voie.

2. Procédé selon la revendication 1, dans lequel, lorsque les politiques de conduite comprennent en outre la politique d'accélération et la politique de décélération, la commande du véhicule pour effectuer une conduite automatique conformément aux politiques de conduite correspondant au mode de conduite automatique actuel comprend en outre :
si le mode de conduite automatique actuel est le mode de conduite conservateur, commander un temps de réponse d'accélération du véhicule pendant un processus de démarrage et de conduite pour qu'il soit supérieur à la première valeur seuil de temps, une pente de montée d'accélération pour qu'elle soit inférieure à une première valeur seuil de pente d'accélération, une valeur absolue d'une décélération pour qu'elle soit inférieure à une première valeur seuil de décélération, et une pente de décélération pour qu'elle soit inférieure à une première valeur seuil de pente de décélération ;
si le mode de conduite automatique actuel est le mode de conduite conventionnel, commander le temps de réponse d'accélération du véhicule pendant le processus de démarrage et de conduite afin qu'il soit supérieur à la deuxième valeur seuil de temps, la pente d'accélération ascendante inférieure à une deuxième valeur seuil de pente d'accélération, la valeur absolue de la décélération doit être inférieure à une deuxième valeur seuil de décélération, et la pente de décélération doit être inférieure à une deuxième valeur seuil de pente de décélération, dans lequel la deuxième valeur seuil de pente d'accélération est supérieure à la première valeur seuil de pente d'accélération, la deuxième valeur seuil de pente de décélération est supérieure à la première valeur seuil de pente de décélération, et la deuxième valeur seuil de décélération est supérieure à la première valeur seuil de décélération ;
si le mode de conduite automatique actuel est le mode de conduite agressif, commander le temps de réponse d'accélération de l' du véhicule pendant le processus de démarrage et de conduite pour qu'il soit supérieur à la troisième valeur seuil de temps, la pente d'accélération pour qu'elle soit inférieure à une troisième valeur seuil de pente d'accélération, la valeur absolue de la décélération est inférieure à une troisième valeur seuil de décélération, et la pente de décélération est inférieure à une troisième valeur seuil de pente de décélération, dans lequel la troisième valeur seuil de pente d'accélération est supérieure à la deuxième valeur seuil de pente d'accélération, la troisième valeur seuil de pente de décélération est supérieure à la deuxième valeur seuil de pente de décélération, et la troisième valeur seuil de décélération est supérieure à la deuxième valeur seuil de décélération ; et
si le mode de conduite automatique actuel est le mode de conduite personnalisé, formuler une politique de commande de l'accélération et une politique de commande de la décélération selon les habitudes de conduite de l'utilisateur, et exécuter la conduite automatique selon la politique de commande de l'accélération et la politique de commande de la décélération.

3. Procédé selon la revendication 1, dans lequel, lorsque les politiques de conduite comprennent en outre la politique de distance de suivi du véhicule et la politique maximale, le contrôle du véhicule pour effectuer une conduite automatique conformément à la politique de conduite correspondant au mode de conduite automatique actuel comprend en outre :
si le mode de conduite automatique actuel est le mode de conduite conservateur, commander la distance de suivi du véhicule pour qu'elle soit supérieure à une première valeur seuil de distance, lorsque le véhicule qui précède s'arrête, si le véhicule est dans un état d'arrêt de suivi, commander la distance entre le véhicule et le véhicule qui précède pour qu'elle soit supérieure à une deuxième valeur seuil de distance, et commander la vitesse maximale du véhicule pour qu'elle soit inférieure à un premier multiple prédéfini de la limite de vitesse actuelle sur la voie ;
si le mode de conduite automatique actuel est le mode de conduite conventionnel, commander la distance de suivi du véhicule afin qu'elle soit supérieure à une troisième valeur seuil de distance, lorsque le véhicule qui précède s'arrête, si le véhicule est en état d'arrêt de suivi, commander la distance entre le véhicule et le véhicule qui précède afin qu'elle soit supérieure à une quatrième valeur seuil de distance, et commander la vitesse maximale du véhicule pour qu'elle soit inférieure à un deuxième multiple prédéfini de la limite de vitesse actuelle sur la voie, dans lequel la troisième valeur seuil de distance est inférieure à la première valeur seuil de distance, la quatrième valeur seuil de distance est inférieure à la deuxième valeur seuil de distance, et le deuxième multiple prédéfini est inférieur au premier multiple prédéfini ;
si le mode de conduite automatique actuel est le mode de conduite agressif, commander la distance de suivi du véhicule pour qu'elle soit supérieure à une cinquième valeur seuil de distance, lorsque le véhicule précédent s'arrête, si le véhicule est en état d'arrêt de suivi, commander la distance entre le véhicule et le véhicule précédent pour qu'elle soit supérieure à une sixième valeur seuil de distance, et en commandant la vitesse maximale du véhicule pour qu'elle soit égale à la limite de vitesse actuelle de la voie, dans lequel la cinquième valeur seuil de distance est inférieure à la troisième valeur seuil de distance, et la sixième valeur seuil de distance est inférieure à la quatrième valeur seuil de distance ; et
si le mode de conduite automatique actuel est le mode de conduite personnalisé, formuler une politique de commande de la distance de suivi du véhicule et une politique de commande de la vitesse maximale selon les habitudes de conduite de l'utilisateur, et exécuter la conduite automatique selon la politique de commande de la distance de suivi du véhicule et la politique de commande de la vitesse maximale.

4. Procédé selon la revendication 1, dans lequel l'étape d'acquérir le mode de conduite automatique actuel du véhicule (S110) comprend :
lorsqu'une opération de clic de l'utilisateur est détectée sur une liste déroulante dans une zone correspondant au mode de conduite automatique dans une interface de mode de conduite automatique, afficher une pluralité de modes de conduite automatique correspondant à la liste déroulante ; et
lorsqu'une opération tactile de l'utilisateur est détectée sur un mode de conduite automatique correspondant à la liste déroulante, acquérir le mode de conduite automatique en tant que mode de conduite automatique actuel.

5. Procédé selon la revendication 4, dans lequel le commande du véhicule pour effectuer une conduite automatique selon la politique de conduite correspondant au mode de conduite automatique actuel (S120) comprend :
si le mode de conduite automatique actuel est le mode de conduite personnalisé, l'envoi d'une requête d'acquisition des paramètres de style de conduite actuel de l'utilisateur à une plateforme de fournisseur de services télématiques (TSP) ;
recevoir les paramètres de style de conduite renvoyés par la plateforme TSP, et la formulation d'une politique de conduite automatique selon les paramètres de style de conduite ; et
commander le véhicule pour qu'il effectue une conduite automatique selon la politique de conduite automatique.

6. Procédé selon la revendication 1, dans lequel l'acquisition du mode de conduite automatique actuel d' e le véhicule (S110) comprend :
l'acquisition d'un mode de conduite automatique entré par l'utilisateur dans une interface de réglage d'interface homme-machine (IHM), et la prise en compte du mode de conduite automatique acquis comme mode de conduite automatique actuel.

7. Dispositif informatique, comprenant une mémoire, un processeur (16) et un programme informatique stocké sur la mémoire (28) et exécutable sur le processeur (16), dans lequel, lors de l'exécution du programme, le processeur (16) implémente le procédé de commande selon l'une quelconque des revendications 1 à 6.

8. Support de stockage lisible par ordinateur, sur lequel est stocké un programme informatique, dans lequel, lorsqu'il est exécuté par un processeur, le programme implémente le procédé de commande selon l'une quelconque des revendications 1 à 6.
